# EUROPEAN PATENT SPECIFICATION

(11) **EP 0 809 908 B1**
(45) Date of publication and mention of the grant of the patent: **18.06.2003**
(21) Application number: 96902294.6
(22) Date of filing: 14.02.1996
(51) Int. Cl.: H04M 3/50

(54) **METHOD FOR INDICATING A WAITING VOICE MESSAGE TO A TELEPHONE SUBSCRIBER**
VERFAHREN ZUR ANZEIGE EINER WARTENDEN SPRACHMITTEILUNG AN EINEN FERNSPRECHTEILNEHMER
PROCEDE POUR INFORMER UN ABONNE AU TELEPHONE D'UN MESSAGE VOCAL EN ATTENTE

(30) Priority: 15.02.1995 FI 950674
(43) Date of publication of application: 03.12.1997
(73) Proprietor: Nokia Corporation, 02150 Espoo (FI)
(72) Inventor: KAISTO, Arto, FIN-91100 Ii (FI)
(74) Representative: Äkräs, Tapio Juhani
(86) International application number: FI9600083
(87) International publication number: WO96025817

(56) References cited:
- EP-A- 0 134 886
- US-A- 4 932 042
- US-A- 5 313 515

## Description

The present invention relates to a method for indicating a waiting voice message to a telephone subscriber according to the preamble of accompanying claim 1.

Centralized answering services are implemented in telephone networks in which a voice mail unit containing several "mail boxes" is connected to the exchange. When a subscriber of the telephone network uses a centralized answering service (a so-called virtual answering machine), one of the mail boxes of the voice mail unit is allocated to the subscriber connection. When a call arrives at the subscriber connection, the terminal exchange of the subscriber routes the call to the voice mail unit to the mail box allocated to the subscriber. Rerouting can be programmed to take place always when the subscriber connection is busy, if the subscriber does not answer or on any such condition. When a rerouted call is connected to the voice mail unit, the unit plays the announcement spoken by the subscriber of the service or by the operator and gives the caller a possibility to leave a voice message to the mail box of the subscriber of the service. The subscriber of the service may listen to the voice messages intended for himself/herself by calling the directory number which is reserved for his/her own mail box at the voice mail unit. A disadvantage is that without calling, the subscriber will not known if the exchange has rerouted any calls to the voice mail unit or if any messages have been recorded.

An improvement to the above is a "message waiting indication" service, i.e., MWI. In that case when the exchange has routed the call directed to the subscriber connection to the voice mail unit, it sets for the subscriber instead of the normal free tone e.g. a message "voice messages have been left to you" or a free tone different from the normal one. A problem in the above case is that the service will be activated even if the caller whose call was routed to the voice mail unit did not leave a voice message.

Answering service systems are also known in which the voice mail unit, that is, a VMS unit (Voice Mail Service) notifies the exchange it is connected to of the recording of the message. In one such voice mail system (EP 493427) of a mobile telephone network the exchange sets a relevant flag as a result of the notification. When the subscriber tries to make a call within a set period of time, the exchange plays a recorded message informing of the messages recorded. If the subscriber does not try to make a call within a set period of time, the exchange will set up a call to the subscriber and delivers the recorded message to the subscriber.

In another solution (EP 481683) also developed for a mobile telephone network, the existence of messages for the subscriber to be reached is indicated by a specific dialling tone or some other tone when the subscriber next time tries to make a call.

In the third case (WO 9214330) a VMS unit informs the exchange it is connected to of the recording of the message. The exchange reports the message to the short message centre which generates a short message notifying of the recorded message which short message is sent to the subscriber's mobile phone.

Therefore it is known that the VMS unit can identify the recording of a message and notify the exchange it is connected to. It is also known that the exchange the subscriber of which has a voice mail service in use is able to notify the subscriber of the waiting messages by playing a recorded message, with a specific dialling tone or another audio signal, a short message or some other paging device.

There are also systems in which the voice message of a calling subscriber will be delivered (at a later period of time) to a called subscriber to be reached who is either busy or does not answer during the calling subscriber's call attempt. This service is called Message Delivery Service or Call Delivery Service. The calling subscriber can start this service by dialling a facility code corresponding to the service after having detected that the called subscriber is busy or does not answer, for example. In that case the call is directed to a service machine that will instruct the subscriber how to leave a message. When leaving the message, the calling subscriber may give additional instructions on the delivery, e.g. when the message should be delivered and/or how many attempts should be made. When the message has been left, the service machine tries to deliver the message to the called subscriber in accordance with the calling subscriber's instructions. This system is disclosed e.g. in U.S. 4,932,042. These systems are, however, intended to be offered as a (chargeable) additional service specifically for the calling subscriber. On the other hand, the called subscriber cannot have any effect on when the message is delivered to him/her.

Thus, voice mail systems are nowadays either (a) bound to a certain network, generally to a mobile communication network, and to a certain exchange in the network that is provided with a VMS unit, or (b) they are additional services intended only for the calling subscriber on which the called subscriber has no effect. There is no general purpose service in which each and every subscriber can be informed of a voice message waiting at the voice mail unit of the network.

The purpose of this invention is to provide a method with which the restrictions mentioned above can be eliminated in a simple way. This object is achieved with the method that is characterized by what is described in the characterizing part of accompanying claim 1.

The idea of the invention is to notify the called subscriber's exchange (and further the called subscriber) only of the existence of a voice message by sending an ordinary signalling message (an initiating message) associated with call set-up to the called subscriber's exchange which message is used for transmitting said information and as a result of which a speech connection fails to be set up whenever said signalling message contains an identifier informing of the existence of the voice message (or any other identifier related to the maintenance of the information on the existence of the voice message).

The notification to be given to the called subscriber can be accomplished with a recorded message, an audio signal, a light signal installed to the phone, a short message or the like.

The voice mail service implemented with the method according to the invention thus comprises several exchanges to at least one of which is connected a VMS unit. A call to any subscriber of these exchanges is routed to the VMS unit for recording a voice message. The notification of the recording may occur e.g. as common channel signalling in CCITT SS7 network either in such a way that the message notifying of the recorded voice message is generated in the VMS exchange or in such a way that the message is generated in the VMS unit. Thus the subscriber's exchange may be any other than the exchange to which the VMS exchange is connected. The VMS unit may be integrated into the exchange or it may be a separate accessory.

In the system according to the invention the VMS unit is able to monitor if a message is recorded or not. If a message is recorded, the VMS unit notifies the subscriber's exchange and only at this stage the exchange will activate the MWI service. The exchange the VMS unit is connected to is called a VMS exchange. If the VMS unit is connected to the subscriber's exchange by analogue circuits, the notification occurs by the agreed protocol. If the VMS unit is connected to any other exchange by analogue circuits, it notifies the VMS exchange by the agreed protocol. The VMS exchange generates a call control message in which the predetermined number is indicated in the CLI (Calling Number Identity) field which number indicates the waiting message. The call control message is sent to the subscriber's exchange which is then able to start the MWI service on the basis of the message.

If the VMS unit is connected to any exchange by digital circuits, the VMS unit itself generates said call control message and sends it to the exchange which it is connected to and the exchange forwards the message to the subscriber's exchange.

The method according to the invention is advantageously used as a value-added service for subscribers who have a virtual answering machine (said mail box at a voice mail unit of the network). This is, however, not necessary as the value-added service may be provided with the method regardless of whether the subscriber has a virtual answering machine or not.

The other preferred embodiments of the invention are characterized by what is disclosed below in the appended claims.

In the following, the invention will be explained in more detail by means of the accompanying drawings, in which
Figure 1 shows the operational environment of the software implementing the method according to the invention in a digital telephone exchange,
Figure 2 shows the operational environment in the method according to the invention for activating and passivating the "voice message waiting" function,
Figures 3a and 3b show a flowchart of the control of the activation and passivation of the "voice message waiting" function in a VMS exchange,
Figures 4a and 4b show a flowchart of the control of the activation and passivation of the "voice message waiting" function in a subscriber's terminal exchange, and
Figure 5 illustrates a signalling message sent to the called subscriber's exchange.

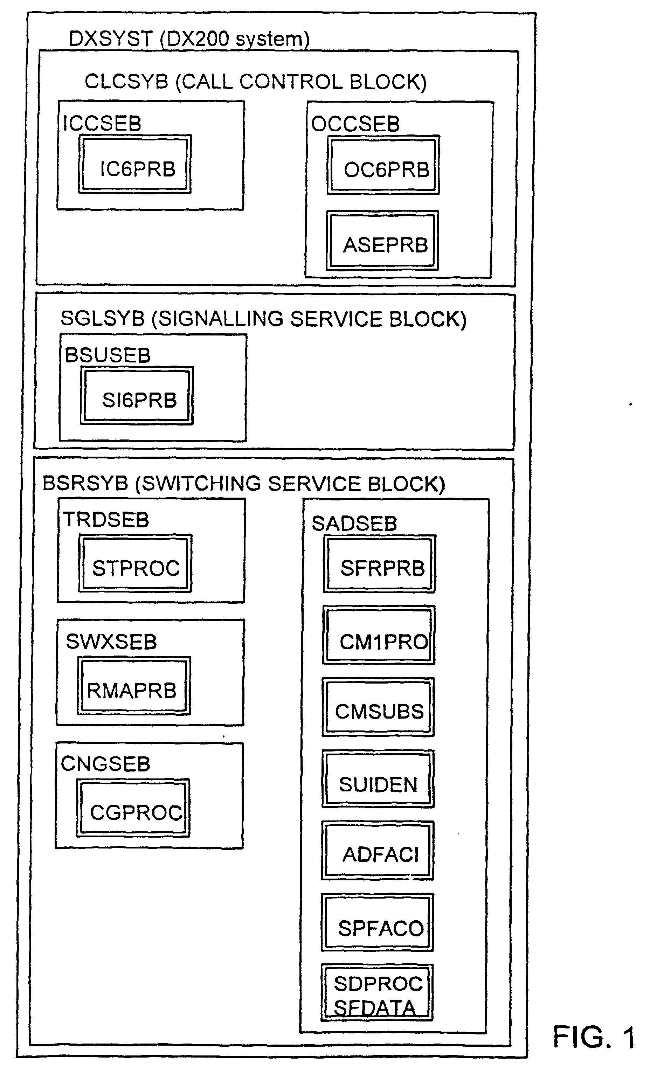

Figure 1 shows the software implementing the method according to the invention in a digital telephone exchange.

Reference sign **DXSYST** refers to the telephone exchange system as a whole, reference sign **CLCSYB** to the call control system of the exchange, reference sign **SGLSYB** to the signalling system of the exchange and reference sign **BSRSYB** to the basic switching system of the exchange.

The service blocks of different systems shown in Figure 1 are:
**BSUSEB** subscriber signalling block
**ICCSEB** incoming call control block
**OCCSEB** outgoing call control block
**SADSEB** subscriber data block
**SWXSEB** switching service block
**TRDSEB** traffic monitoring block
**CNGSEB** charging service block

The program blocks of these service blocks are the following:
**SI6PRB** A program block providing subscriber signalling service attending to call signalling at the call set-up and monitoring stage.
**IC6PRB** A call control program block on the incoming side attending to call control at the call set-up and monitoring stage.
**OC6PRB** A call control program block of a terminating call attending to call control at the call set-up and monitoring stage.
**ASEPRB** A program block of announcements providing announcement service for call control programs.
**SFRBRB** A subscriber facility read program block reading subscriber data from the subscriber database.
**RMAPRB** A program block attending to the administration of switching resources providing a switching service to the switching field based on a call identifier.
**STPROC A** statistics program block performing facility activation, passivation and compiles statistics of use.
**CMSUBS** An updating program block of subscriber facilities updating facility data to the subscriber database.
**CM1PRO** A program block attending to the subscriber data administration updating subscriber data in the subscriber database.
**SPFACO A** facility control administration block. Implemented with known MML (Man-Machine Language) command language by means of which the operator can administer the operation of the exchange.
**SUIDEN** An administration block for subscriber identification data with which the creation, deletion and interrogation of a subscriber is performed. Implemented with known MML (Man-Machine Language) command language by means of which the operator can administer the operation of the exchange.
**SDPROC** An administration program block of subscriber facility database attending to the reading and updating of subscriber database.
**SFDATA** A subscriber database.
**ADFACI** An administration block of additional subscriber facilities with which a subscriber is provided with rights and additional information of the facility. Implemented with known MML (Man-Machine Language) command language by means of which the operator can administer the operation of the exchange.
CGPROC A charging program block performing the storing of call charging data.

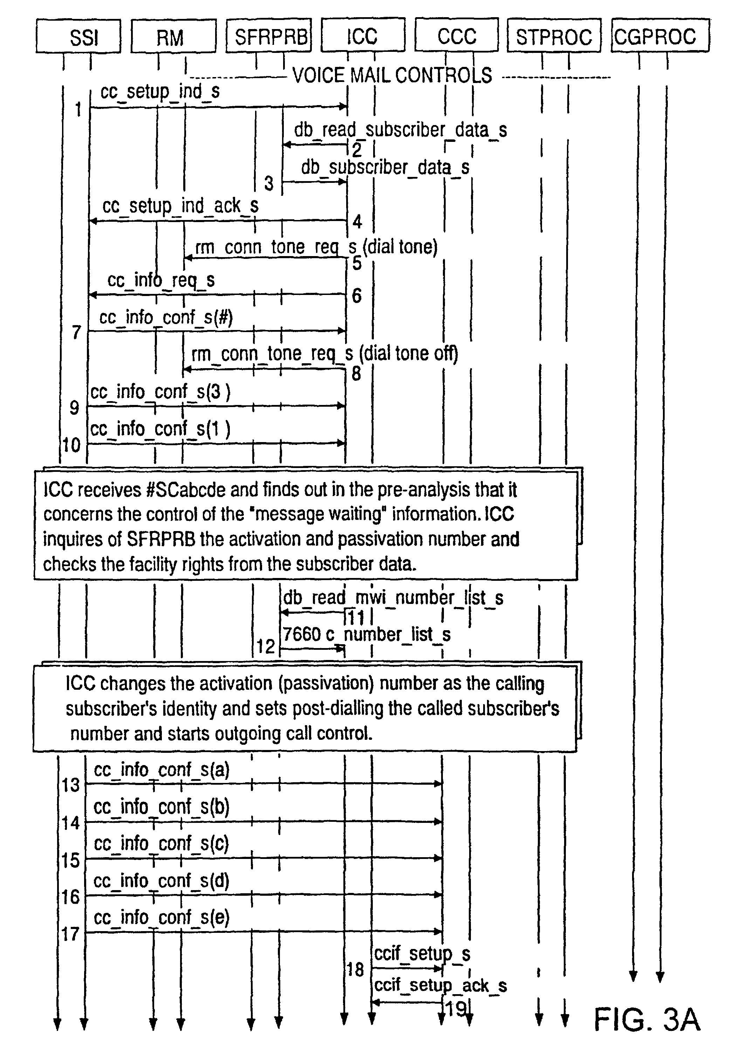

Figure 2 shows a block diagram of the implementation of the method according to the invention for activating and passivating the voice message announcement. A voice mail is indicated by reference numeral 1, a switching exchange to which the voice mail facility is connected by numeral 2, the subscriber's switching exchange by numeral 3 and the called subscriber by numeral 4. The called subscriber can of course be connected to the voice mail exchange (subscriber 4 with broken lines). Reference sign SSI is the common name for the signalling program block on the incoming side, SSO is the common name for the signalling program on the outgoing side, ICC is the common name for the call control program blocks on the incoming side in ICCSEB and OCC is the common name for call control program block OCCSEB on the outgoing side. The switching exchanges are connected to a public switched telephone network 10 with a SS7 connection known per se, for example, that is, traffic control and management in the network are based on common channel signalling (CCS).

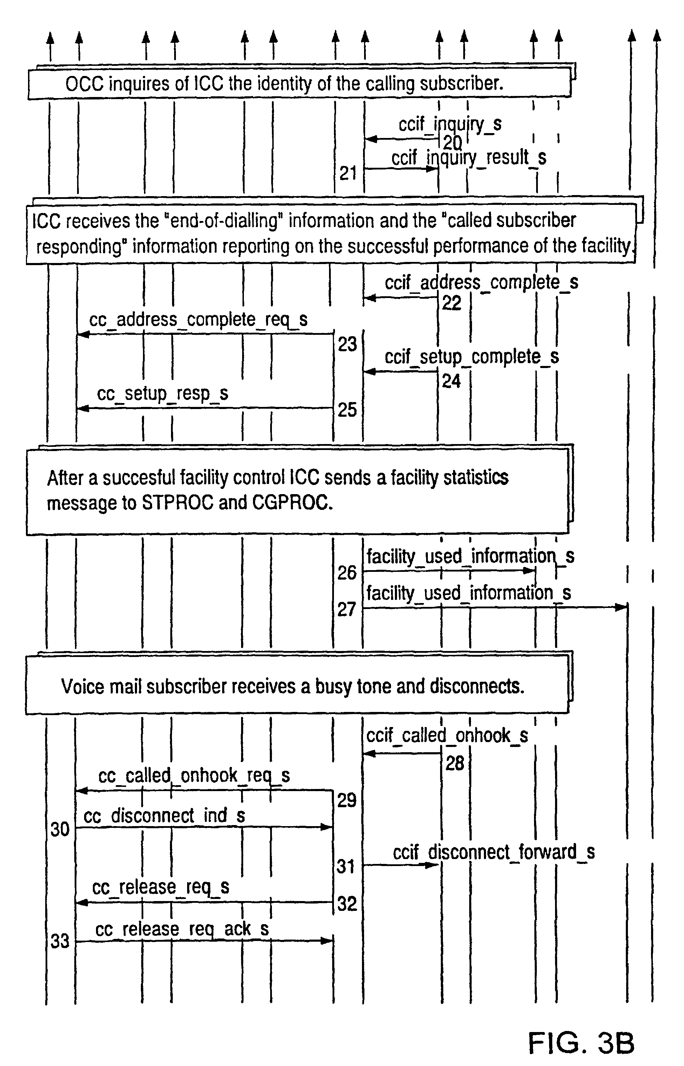

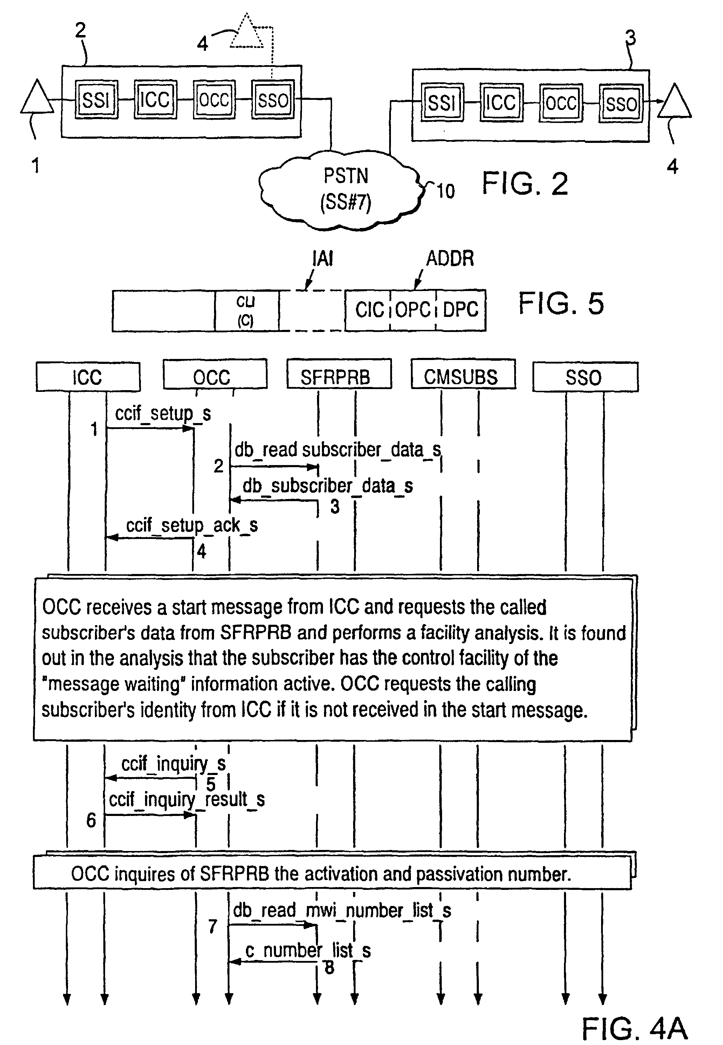

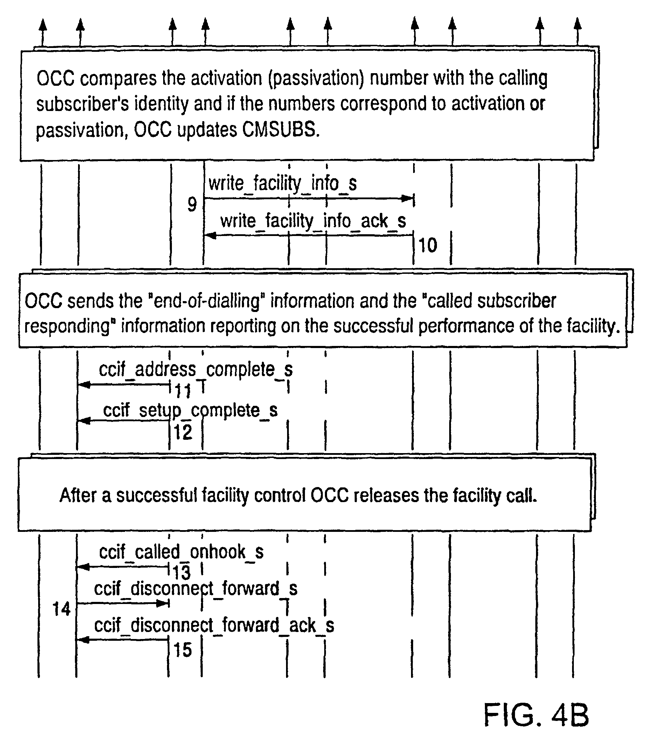

In the following, the operation of the method according to the invention is described with reference to Figures 3a and 3b, and 4a and 4b which disclose detailed flowcharts and explanations of the control of the "message waiting" information in the VMS exchange and in the subscriber's exchange. Figures 3a and 3b describe functions in the VMS exchange and Figures 4a and 4b functions in the subscriber's exchange. Figures 3a and 3b and, correspondingly, Figures 4a and 4b form a whole in which the figures overlap at the arrowheads.

The method uses the messages of normal subscriber calls in the following way:
**db_read_subscriber_data_s**
- block IC6PRB requests subscriber data of block SFRPRB from which IC6PRB sees if the subscriber connection has a right to activate the control facility of the "message waiting" information, or
- block OC6PRB requests subscriber data of block SFRPRB from which OC6PRB sees if the subscriber connection has a right to use the control facility of the "message waiting" information.
**db_read_mwi_number_list_s**
- block IC6PRB or OC6PRB inquires of block SFRPRB the activation or passivation number of the "message waiting" information from the subscriber database. Message **c_number_list_s** is received as an acknowledgement.
**facility_used_information_s**
- a statistics message that block IC6PRB sends to blocks STPROC and CGPROC. STPROC compiles statistics on the times of use of the service specifically for each exchange.

When the calling subscriber 1 calls the called subscriber 4 and the called subscriber is busy or does not answer, the call is automatically directed (if the "virtual answering machine" facility is in subscriber's use) to a voice mail system to which the calling subscriber may leave the desired message for the called subscriber.

When a message has been left for the called subscriber 4, the voice mail system "calls" automatically via the subscriber line to the called subscriber, as a result of which the call control block on the incoming side of the VMS exchange receives an initial message (message 1, Figure 3a). Block IC6PRB checks the rights of the voice mail to the facility from the subscriber data (message 2) and releases the facility call if there are no rights.

In order that the "message waiting" information could be set along the subscriber line to the subscriber data of the subscriber, analogue connections should be created in the exchange for the use of the voice mail system which connections are given a right to activate the "message waiting" information for the subscribers.

The following subscriber procedures are used in the voice mail system with which procedures the "message waiting" information is directed to the called subscriber's subscriber data. As was mentioned above, together with the control facility of the "message waiting" information the subscriber may have a virtual answering facility in use at the same time.

The activation or passivation of the "message waiting" information may take place e.g. with the following facility codes in which abbreviation NK = "lift the handset off the hook"; abbreviation VÄ = "dialling tone"; abbreviation SC = "facility code"; abbreviation VT = "busy tone"; and abbreviation LK = "put the handset onhook". abcde is a subscriber number which can contain an area code.
Activation:
NK VÄ #SCabcde VT LK
Passivation:
NK VÄ #SCabcde VT LK

For example, facility code (number series) SC=31 can be used in activation and facility code SC=30 in passivation. (Even if activation is performed as a result of the message left for the called subscriber, passivation performed by the voice mail system is also described here. Passivation is performed as a result of the subscriber having listened to all the messages.)

Program block IC6PRB of the VMS exchange analyzes in a pre-analysis the selection of the voice mail system (e.g. #31 (or #30) that it receives in message 7) as an internal facility code and detects that it concerns activation or passivation of the "message waiting" information.

If voice mail has a right to the facility, IC6PRB searches the activation and passivation number (message 11), and depending on whether it concerns activation or passivation, it sets the activation or passivation number obtained from block SFRPRB (in message 12) as the identity of the calling subscriber. From this point forwards IC6PRB operates as in a normal call, that is, starts outgoing call control by setting the called subscriber's number (abcde) following the facility code as the selection. This is described in Figures 3a and 3b from message 13 onwards. As this takes places in a manner known per se and it does not relate to the actual inventive concept, it will not be described in more detail in this context. The progress of the facility can be seen in the text blocks of the figures.

The activation or passivation number is set in the VMS exchange into a CLI field (Calling Line Identity) of a normal call control message (initial message). This initial message can be either an IAM message (Initial Address Message) if ISDN User Part ISUP is used as a user part in the CCS system, or an IAI message (Initial Address message with additional Information) if a telephone user part TUP is used as a user part. Figure 5 illustrates the IAI message. The IAI message comprises an address field ADDR of 40 bits in length containing a destination point code DPC, an originating point code OPC and a circuit identification code CIC. In a normal IAI message, the identity of the calling connection is transmitted in the CLI field of the IAI message, but in this case said activation or passivation number is set in this field to inform that it concerns a notification with which information related to a voice message is maintained. The activation/passivation number is indicated in Figure 5 by reference sign C.

When a signalling message arrives at the called subscriber's exchange, block PC6PRB searches the subscriber data from block SRFPRB (message 2, Figure 4a). There is information in the subscriber data of the exchange that the subscriber has the control facility of the "message waiting" information in use. The subscriber is not hunted (as a speech connection will not be set up).

When the identity of the calling subscriber has been obtained (from the CLI field), block OC6PRB inquires of block SFRPRB the additional information of the facility (message 7, Figure 4a). Block SFRPRB gives as a response the activation and passivation numbers. Block OC6PRB compares the identity of the calling subscriber with the numbers. If it is an activation number of the "message waiting" information, block OC6PRB sends message 9 (write_facility_info_s) to block CMSUBS which on the basis of the message will set in the called subscriber's subscriber data information on that a message has arrived at the voice mail (or passivates said information if it concerns passivation).

At the end, the call control on the outgoing side sends "dialling received" information and "the called subscriber responding" information reporting on the successful performance of the facility. As a result of a successful facility control, the call control on the outgoing side releases the facility call.

When the called subscriber next goes off-hook, a "message waiting" announcement is switched to him/her. After this, it is possible for the subscriber to listen to the message(s) or continue to set up a call in a normal way. If the subscriber does not e.g. during a time supervision period press any button, the time supervision facility is activated and a call is set up at the voice mail. When the subscriber has listened to all the messages, the voice mail system deletes the "message waiting" information from the called subscriber's subscriber data (passivation).

The control of the "message waiting" information works in exchanges in which the voice mail system and the subscribers are in the same exchange. If the called subscriber and the voice mail system are connected to different exchanges, the calling subscriber's identity has to be transferred in the signalling between the exchanges.

The notification given to the called subscriber on the basis of the stored subscriber data can be implemented e.g. with an audio signal or a light signal or the like manner. For example, GSM short message confirmation can also be utilized in giving the notification. There may be e.g. an additional indication in the subscriber data informing that the notification should be given via the short message service of the GSM network. Then the subscriber's exchange generates (in a manner known per se) the notification given as a short message directly to the short message centre of the GSM network that transfers the message further to the mobile service switching centre that will route the message via the correct base station to the mobile station.

In administration block SUIDEN of subscriber identification data the creation, deletion and interrogation of the subscriber are performed. By means of the block the identification of the voice mail is administered in subscriber database SFDATA. The data is stored into the subscriber file of the subscriber database by means of central memory program block CMlPRO.

Subscriber database SFDATA contains at least the following information for each subscriber connection and subscriber:
- subscriber connection identifier (voice mail) ;
- information on whether the subscriber connection has a right to activate the control facility of the "message waiting" information;
- information on whether the subscriber has a right to the control facility of the "message waiting" information;
- the subscriber's activation number of the "message waiting" information; and
- the subscriber's passivation number of the "message waiting" information.

Administration block ADFACI of additional subscriber facilities administers the activation and passivation number of the "message waiting" information of the voice mail and the subscriber in the subscriber database. The information is stored into subscriber database SFDATA by means of central memory program block CM1PRO. The right of the voice mail to activate the "message waiting" information and subscriber's right to activate the control facility of the "message waiting" information are also administered by means of block ADFACI. The activation right of the facility is visible only to analogue subscriber connections. The right to use the facility is visible both to analogue and ISDN subscriber connections.

No subscriber facility will prevent the activation or passivation of the "message waiting" information. The facility of the subscriber for whom the "message waiting" information is activated or passivated is specific for each subscriber connection. The activation and passivation times of the facility are compiled into a statistics specifically for each exchange.

The reservation of the facility takes place at the request from a telephone company for example at the same time as-the "virtual answering machine" facility is activated for the subscriber. The operating personnel makes the reservation by an operation and maintenance command. The subscriber can be charged administratively for reserving the facility. Call-specific charging can be used when the voice mail system activates or passivates the "message waiting" subscriber data. Then the subscriber to be charged is the called subscriber. The availability of the control facility of the "message waiting" information can be restricted, when needed, it can e.g. be given to 10% of the number of subscribers in the exchange.

The facility can be given up in the same way as it is reserved, that is, at the request from a telephone company, whereby messages can no longer be left for the subscriber in the voice mail. The operating personnel deletes the subscriber's right to use the facility by an operation and maintenance command. The deletion of the right to use the facility does not delete the possible active "message waiting" information from the subscriber. The subscriber can thus listen to the messages in a normal way, but new messages cannot be recorded any more for the subscriber.

If the voice mail system allows it, the subscriber may listen to the messages also from other subscriber connections than his/her own connection by calling a number selected for him/her in the voice mail. After the subscriber has listened to all the messages and after having disconnected, the voice mail system requests the exchange via the subscriber line to delete automatically the "message waiting" information from the subscriber data.

By the operation and maintenance commands the subscriber is given or denied the right to direct his/her calls by means of the "virtual answering machine" facility to the voice mail in which messages can be left for the subscriber. This right enables the setting of the "message waiting" service into the subscriber data or its deletion from the subscriber data.

It is obvious to those skilled in the art that the various embodiments of the invention are not restricted to the examples shown above, but they can vary freely within the scope of the appended claims and the inventive concept according to the invention disclosed above. The method according to the invention can be combined to a service (discussed at the beginning) in which the calling subscriber starts the recording of the message.

## Claims

1. A method for indicating a waiting voice message to a telephone subscriber in a network comprising several switching exchanges (2, 3) in which method
- a voice message intended for a specified telephone subscriber is recorded into a voice mail unit (1) in a switching exchange, and
- said telephone subscriber (4) is informed of the existence of the recorded voice message,
**characterized in that**
- in response to the recording of the voice message, a standard signalling message related to call set-up is sent via interexchange signalling system to the telephone subscriber's exchange, the message being provided with an identifier informing of the recorded message,
- after having received said signalling message containing said identifier, the telephone subscriber's exchange fails to set up a speech connection and stores into said subscriber's subscriber data information on that a voice message intended for the subscriber is recorded into the voice mail unit of the network, and
- the telephone subscriber's exchange transfers information on the existence of the voice message to the subscriber on the basis of the stored subscriber data.

2. A method according to claim 1, **characterized in that** a call intended for the telephone subscriber (4) is routed automatically to the exchange (2) provided with a voice mail unit (1) if there is no answer or if the line is busy.

3. A method according to claim 1 or 2, **characterized in that** the signalling message is generated in the exchange (2) provided with a voice mail unit (1) by marking the number indicating the waiting message as an identifier.

4. A method according to claim 1 or 2, **characterized in that** the signalling message is generated at the voice mail unit (1) by marking the number indicating the waiting message as an identifier.

5. A method according to claim 1, **characterized in that** information on the existence of the voice message is transmitted to the telephone subscriber (4) receiving the message with a special recorded message, an audio signal, a light signal, a short message or the like.

6. A method according to claim 1, **characterized in that** after the subscriber (4) has listened to all the voice messages, information on the existence of the voice message is removed by deleting the notification relating to it from the subscriber's subscriber data.

7. A method according to claim 6, **characterized in that** the removal is performed by sending a standard signalling message related to call set-up to the telephone subscriber's exchange in which message the identifier indicating the recorded voice message is replaced by an identifier relating to the removal.

8. A method according to claim 1, **characterized in that** the message informing of the recorded message is sent by common channel signalling CCS in CCITT SS7 network.

9. A method according to claim 8, **characterized in that** the identifier informing of the recorded message is sent in the CLI field of the signalling message.

10. A method according to claim 1, **characterized in that** it is used as an additional service for subscribers who have a virtual answering machine with a voice mail unit (1).

## Patentansprüche

1. Verfahren zur Anzeige einer wartenden Sprachmitteilung für einen Fernsprechteilnehmer in einem Netzwerk mit mehreren Vermittlungsstellen (2, 3), wobei
eine für einen bestimmten Fernsprechteilnehmer gedachte Sprachmitteilung in einer Sprachspeichereinheit (1) in einer Vermittlungsstelle aufgezeichnet wird, und
der Fernsprechteilnehmer (4) über die Existenz der aufgezeichneten Sprachmitteilung informiert wird,
**dadurch gekennzeichnet, dass**
im Ansprechen auf die Aufzeichnung der Sprachmitteilung eine Standardsignalisierungsmitteilung bezüglich eines Rufaufbaus über ein Austauschsignalisierungssystem zur Vermittlungsstelle des Fernsprechteilnehmers gesendet. wird, wobei die Mitteilung mit einem Identifizierer versehen ist, der über die aufgezeichnete Mitteilung informiert,
nach dem Empfang der den Identifizierer enthaltenden Signalisierungsmitteilung die Vermittlungsstelle des Fernsprechteilnehmers eine Sprachverbindung nicht aufbauen kann und in den Teilnehmerdaten des Teilnehmers Informationen darüber speichert, dass eine für den Teilnehmer gedachte Sprachmitteilung in der Sprachspeichereinheit des Netzwerks aufgezeichnet ist, und
die Vermittlungsstelle des Fernsprechteilnehmers Informationen über die Existenz der Sprachmitteilung zum Teilnehmer auf der Grundlage der gespeicherten Teilnehmerdaten überträgt.

2. Verfahren nach Anspruch 1,
**dadurch gekennzeichnet, dass**
ein für den Fernsprechteilnehmer (4) gedachter Ruf automatisch zur Vermittlungsstelle (2) geroutet wird, die mit einer Sprachspeichereinheit (1) versehen ist, wenn keine Antwort erhalten wird, oder wenn die Leitung belegt ist.

3. Verfahren nach Anspruch 1 oder 2,
**dadurch gekennzeichnet, dass**
die Signalisierungsmitteilung in der Vermittlungsstelle (2) erzeugt wird, die mit einer Sprachspeichereinheit (1) versehen ist, indem die die wartende Mitteilung angebende Nummer als Identifizierer markiert wird.

4. Verfahren nach Anspruch 1 oder 2,
**dadurch gekennzeichnet, dass**
die Signalisierungsmitteilung an der Sprachspeichereinheit (1) durch Markieren der die wartende Mitteilung angebenden Nummer als Identifizierer erzeugt wird.

5. Verfahren nach Anspruch 1,
**dadurch gekennzeichnet, dass**
Informationen über die Existenz der Sprachmitteilung zum Fernsprechteilnehmer (4) übertragen werden, der die Mitteilung mit einer speziell aufgezeichneten Mitteilung, einem Audiosignal, einem Lichtsignal, einer Kurzmitteilung oder dergleichen empfängt.

6. Verfahren nach Anspruch 1,
**dadurch gekennzeichnet, dass**
nachdem der Teilnehmer (4) alle Sprachmitteilungen abgehört hat, Informationen über die Existenz der Sprachmitteilung durch Löschen der diesbezüglichen Benachrichtigung aus den Teilnehmerdaten des Teilnehmers entfernt werden.

7. Verfahren nach Anspruch 6,
**dadurch gekennzeichnet, dass**
das Entfernen durch Senden einer Standardsignalisierungsmitteilung bezüglich eines Rufaufbaus zur Vermittlungsstelle des Fernsprechteilnehmers durchgeführt wird, wobei in dieser Mitteilung der die aufgezeichnete Sprachmitteilung angebende Identifizierer durch einen das Entfernen betreffenden Identifizierer ersetzt wird.

8. Verfahren nach Anspruch 1,
**dadurch gekennzeichnet, dass**
die über die aufgezeichnete Mitteilung informierende Mitteilung durch eine gemeinsame Kanalsignalisierung CCS im CCITT SS7-Netzwerk gesendet wird.

9. Verfahren nach Anspruch 8,
**dadurch gekennzeichnet, dass**
der über die aufgezeichnete Mitteilung informierende Identifizierer im CLI-Feld der Signalisierungsmitteilung gesendet wird.

10. Verfahren nach Anspruch 1,
**dadurch gekennzeichnet, dass**
es als zusätzlicher Dienst für Teilnehmer verwendet wird, die einen virtuellen Anrufbeantworter mit einer Sprachspeichereinheit (1) haben.

## Revendications

1. Procédé pour indiquer un message vocal en attente à un abonné au téléphone dans un réseau comprenant plusieurs centraux téléphoniques (2, 3), dans lequel procédé :
- un message vocal destiné à un abonné au téléphone spécifié est enregistré dans une unité de messagerie vocale (1) dans un central téléphonique, et
- ledit abonné au téléphone (4) est informé de l'existence du message vocal enregistré,
**caractérisé en ce que**
- en réponse à l'enregistrement du message vocal, un message de signalisation standard concernant l'établissement d'appel est envoyé, par l'intermédiaire d'un système de signalisation interurbain, au central téléphonique de l'abonné au téléphone, le message étant pourvu d'un identificateur informant du message enregistré,
- après avoir reçu ledit message de signalisation contenant ledit identificateur, le central téléphonique de l'abonné au téléphone n'établit pas de connexion vocale et mémorise dans les données d'abonné dudit abonné des informations concernant le fait qu'un message vocal destiné à l'abonné est enregistré dans l'unité de messagerie vocale du réseau, et
- le central téléphonique de l'abonné au téléphone transfère à l'abonné les informations concernant l'existence du message vocal sur la base des données d'abonné mémorisées.

2. Procédé selon la revendication 1, **caractérisé en ce qu'**un appel destiné à l'abonné au téléphone (4) est acheminé automatiquement vers le central téléphonique (2) pourvu d'une unité de messagerie vocale (1) s'il n'y a pas de réponse ou si la ligne est occupée.

3. Procédé selon la revendication 1 ou 2, **caractérisé en ce que** le message de signalisation est généré dans le central téléphonique (2) pourvu d'une unité de messagerie vocale (1) en marquant le numéro indiquant le message en attente en tant qu'identificateur.

4. Procédé selon la revendication 1 ou 2, **caractérisé en ce que** le message de signalisation est généré au niveau de l'unité de messagerie vocale (1) en marquant le numéro indiquant le message en attente en tant qu'identificateur.

5. Procédé selon la revendication 1, **caractérisé en ce que** les informations concernant l'existence du message vocale sont transmises à l'abonné au téléphone (4) recevant le message par un message enregistré spécial, un signal audio, un signal lumineux, un message court ou similaire.

6. Procédé selon la revendication 1, **caractérisé en ce que**, après que l'abonné (4) ait écouté tous les messages vocaux, les informations concernant l'existence du message vocal sont retirées en supprimant la notification le concernant des données d'abonné de l'abonné.

7. Procédé selon la revendication 6, **caractérisé en ce que** la suppression est effectuée en envoyant un message de signalisation standard concernant l'établissement d'appel au central téléphonique de l'abonné au téléphone, dans lequel message, l'identificateur indiquant le message vocal enregistré est remplacé par un identificateur concernant la suppression.

8. Procédé selon la revendication 1, **caractérisé en ce que** le message informant du message enregistré est envoyé par une signalisation à canal commun dans le réseau CCITT SS7.

9. Procédé selon la revendication 8, **caractérisé en ce que** l'identificateur informant du message enregistré est envoyé dans le champ CLI du message de signalisation.

10. Procédé selon la revendication 1, **caractérisé en ce qu'**il est utilisé en tant que service supplémentaire pour des abonnés qui disposent d'un répondeur virtuel avec une unité de messagerie vocale (1).
